# EUROPÄISCHE PATENTSCHRIFT

(11) **EP 1 127 641 B1**
(45) Veröffentlichungstag und Bekanntmachung des Hinweises auf die Patenterteilung: **01.03.2006**
(21) Anmeldenummer: 00124890.5
(22) Anmeldetag: 15.11.2000
(51) Int. Cl.: B23B 31/16

(54) **Spannfutter**
Chuck
Mandrin

(30) Priorität: 23.02.2000 DE 10008261
(43) Veröffentlichungstag der Anmeldung: 29.08.2001
(73) Patentinhaber: Röhm GmbH, 89567 Sontheim (DE)
(72) Erfinder: Günter Horst Röhm, 89567 Sontheim (DE)
(74) Vertreter: Hentrich, Swen

(56) Entgegenhaltungen:
- DE-A- 2 218 637
- US-A- 4 960 285
- US-A- 5 842 705

## Beschreibung

Die Erfindung betrifft ein Spannfutter mit mindestens zwei Spannbacken, bestehend aus einer Aufspannbacke und einer Grundbacke, insbesondere einer durch eine axial im Futterkörper verschiebbar gelagerte Spannstange in radialen Führungsaufnahmen verstellbare Grundbacke, wobei an der Grundbacke und der Aufspannbacke miteinander zur Deckung kommende Nuten ausgebildet sind, in denen ein reversibel deformierbares Zentrierglied angeordnet ist.

Ein deratiges Spannfutter ist in der US 4960 285 offenbart, bei dem das Zentrierglied durch einen länglichen Reif mit parallelen Seitenflächen gebildet ist, die den Nutwänden anliegen. Die beiden die die Seitenflächen verbindenden Reifbögen entsprechen mit ihrem Radius der Nutzbreite und die Flexibilität ist im wesentlichen durch eine Durchbiegung der Seitenflächen gegeben, die jedoch durch die Steifigkeit der Reifbögen ein Ausrichten der Aufspannböcke gegenüber der Grundbacke nicht fördert.

Die Spanngenauigkeit bei diesen Spannfuttern hängt aber davon ab, daß die Aufspannbacke präzise auf der Grundbacke befestigt wird, damit die relative Ausrichtung gegenüber den Aufspannbacken weiterer Grundbacken korrekt erfolgt. Dazu ist es bekannt, in den Grundbacken Kugelaufnahmen vorzusehen, in die Kugeln eingepaßt werden können, denen gegenüber die Aufspannbacken sich mittels ihrerseits in den Aufspannbacken ausgebildeten Kugelaufnahmen ausrichten, wobei die Kugelaufnahmen sich vom Rand nach innen verjüngen, um dieses Ausrichten zu bewirken. Damit wird zwar eine korrekte radiale Ausrichtung der Spannbacken gegenüber den Grundbacken ermöglicht, jedoch ist eine gleichmäßige flächige Anlage nicht gewährleistet, da die Kugeln, je nach dem, wie tief sie in die Kugelaufnahmen eindringen, zu einem Spiel zwischen Grundbacke und Aufspannbacke führen können.

Der Erfindung liegt daher die Aufgabe zugrunde, ein Spannfutter der eingangs genannten Art so auszubilden, daß eine spielfreie Anlage der Aufspannbacken an den Grundbacken ermöglicht ist.

Diese Aufgabe wird nach der Erfindung bei einem Spannfutter der eingangs genannten Art dadurch gelöst, daß das Zentrierglied durch eine an der Grundbacke befestigte Hohlwalze gebildet ist.

Diese Ausgestaltung bietet den Vorteil, daß bei der Befestigung der Aufspannbacke auf der Grundbacke unverändert über das Zentrierglied eine Ausrichtung der Aufspannbacke erfolgt, daß dabei aber das Zentrierglied anders als die aus dem Stand der Technik bekannten Kugel eine Annäherung der Aufspannbacke bis zur vollen Anlage an die Grundbacke zuläßt, da es der auf das Zentrierglied einwirkenden Kraft nachgeben kann. Eine senkrecht zu der Achse der Hohlwalze auf diese einwirkende Kraft bewirkt eine Querschnittsveränderung, bei der in der senkrecht zu der einwirkenden Kraft liegenden Richtung sich die Hohlwalze verbreitert und sich in der in Kraftwirkung liegenden Richtung verjüngt und damit eine stärkere Annäherung der Aufspannbacke an die Grundbacke ermöglicht.

Dies ist besonders günstig, wenn die Nuten in der Grundbacke und der Aufspannbacke eine V-förmige Gestalt haben, da dann bei der Deformation der Hohlwalze sich diese flächig den gegenüberliegenden Nutflanken anlegt und so trotz der Deformation die zentrierende Wirkung der als Zentrierglied vorgesehenen Hohlwalze erhalten bleibt.

Im Hinblick auf die Einfachheit der Fixierung ist vorgesehen, daß die Hohlwalze durch einen den Durchgang der Hohlwalze durchgreifenden Anker an der Grundbacke festgelegt ist.

In seiner einfachsten, kostengünstig herzustellenden Form ist der Anker so ausgeführt, das der Anker durch einen U-förmigen, mit einem Schenkel in der Nut verankerten Bügel gebildet ist.

Um die zentrierende Wirkung des Zentriergliedes vollständig ausnutzen zu können, sind in der Grundbacke und der Aufspannbacke zwei nicht parallel insbesondere rechtwinklig zueinander verlaufenden Nuten ausgebildet, denen mindestens drei Zentrierglieder angeordnet sind.

Im folgenden wird die Erfindung an einem in der Zeichnung dargestellten Ausführungsbeispiel näher erläutert; es zeigen:

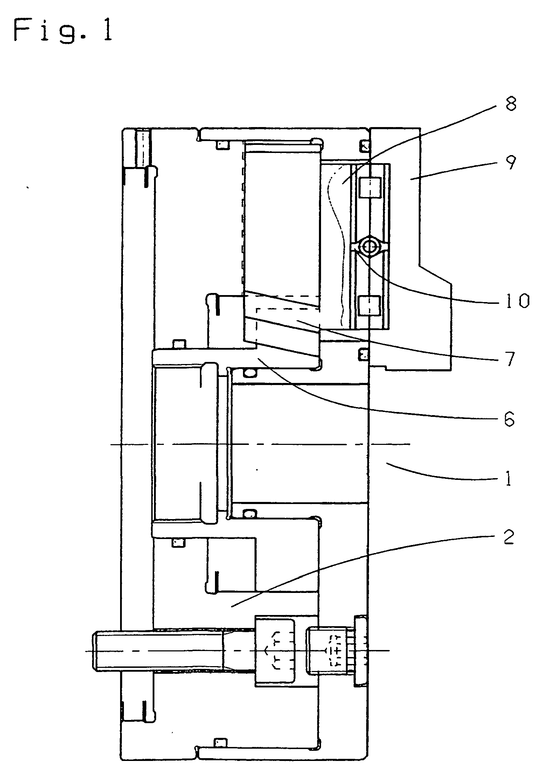

- Fig. 1: einen Querschnitt durch ein Spannfutter mit einer erfindungsgemäß gestalteten, in die Führungsaufnahme eingesetzten Grundbacke,
- Fig. 2: einen Ausschnitt einer Vorderansicht des Spannfutters aus Fig. 1,
- Fig. 3: den Schnitt III-III aus Fig. 2,

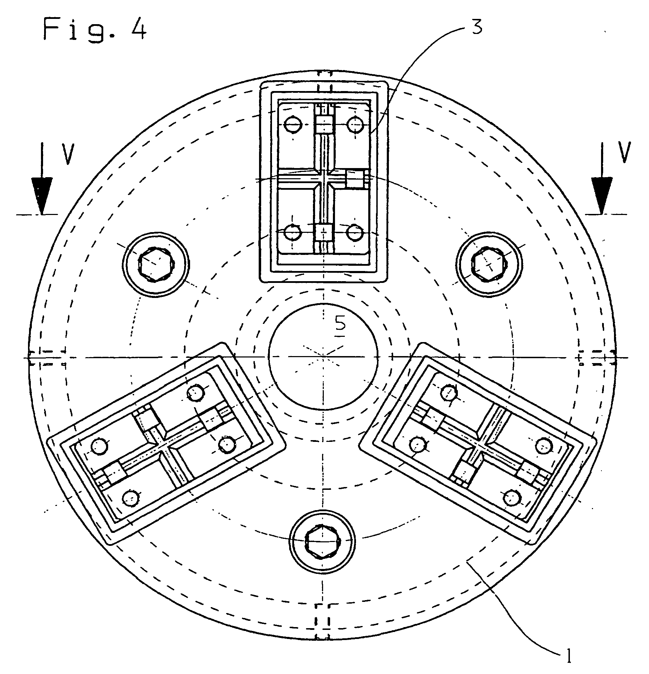

- Fig. 4: eine Vorderansicht eines Spannfutters, und

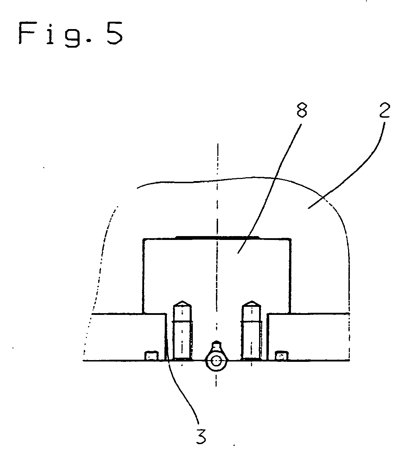

- Fig. 5: den Schnitt V-V aus Fig. 4.

In der Zeichnung ist ein Spannfutter 1 dargestellt, das einen Futterkörper 2 ausweist, in dem drei gleichmäßig über den Umfang verteilt angeordnete, radial verlaufende Führungsaufnahmen 3 ausgebildet sind, in die radial verstellbare Spannbacken eingesetzt werden können. Zur Verstellung der Spannbacken ist eine in einer zentralen Bohrung 5 des Futterkörpers 2 angeordnete Spannstange 6 vorgesehen, deren axiale Verstellung in bekannter Weise über Keilstangen, oder, wie in der Zeichnung dargestellt, über Keilhaken 7 in eine radiale Verschiebung der Spannbacken umgesetzt wird.

Die Spannbacken selber bestehen aus in den Führungsaufnahmen 3 einsetzbaren Grundbacken 8 und aus auf den Grundbacken 8 fixierbaren Aufspannbacken 9, die den eigentlichen Kontakt mit dem zu spannenden Werkstück herstellen und entsprechend dem zu spannenden Werkstück ausgetauscht werden können.

Damit die Aufspannbacken 9 präzise und spielfrei an den Grundbacken 8 anliegen, sind an der Grundbacke 8 und der Aufspannbacke 9 miteinander zur Deckung kommende, eine V-förmige Gestalt aufweisende Nuten 10 ausgebildet, in denen als ein reversibles deformierbares Zentrierglied 11 eine Hohlwalze 12 angeordnet ist. Diese Hohlwalze 12 ist durch einen U-förmigen Bügel 13, der den Durchgang 14 der Hohlwalze 12 durchgreift, mit einem Schenkel in der Nut 10 verankert, so daß die Hohlwalze 12 in einfacher und kostengünstiger Weise in den V-förmigen Nuten 10 der Grundbacke 8 fixiert werden kann und bereits bestehende Grundbacken 8 auch in einfacher Weise erfindungsgemäß nachgerüstet werden können.

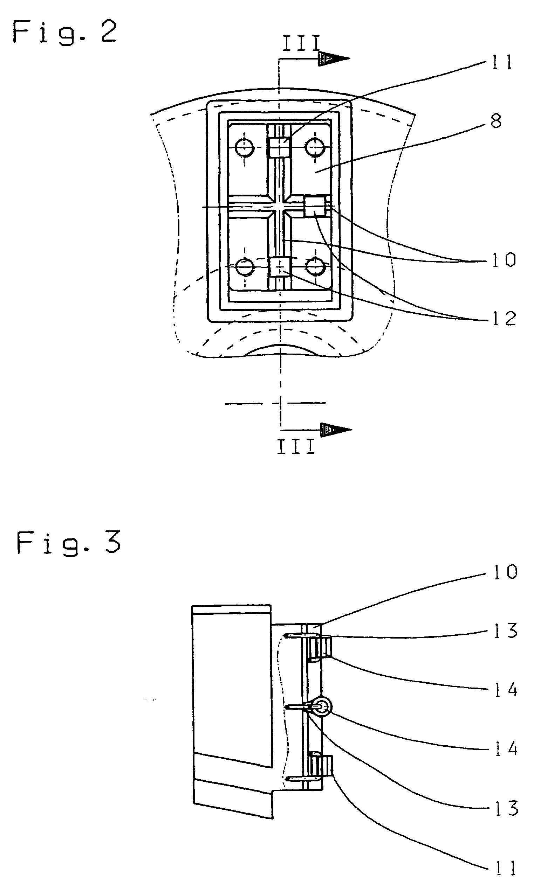

Wie insbesondere aus Fig. 2 zu erkennen ist, sind in der Grundbacke 8 und der Aufspannbacke 9 zwei nicht parallel, insbesondere rechtwinklig zueinander verlaufende Nuten 10 ausgebildet, in denen drei Zentrierglieder 11 angeordnet sind.

## Patentansprüche

1. Spannfutter mit mindestens zwei Spannbacken, bestehend aus einer Aufspannbacke (9) und einer Grundbacke (8), insbesondere einer durch eine axial im Futterkörper (2) verschiebbar gelagerte Spannstange (6) in radialen Führungsaufnahmen (3) verstellbare Grundbacke (8), wobei an der Grundbacke (8) und der Aufspannbacke (9) miteinander zur Deckung kommende Nuten (10) ausgebildet sind, in denen ein reversibel deformierbares Zentrierglied (11) angeordnet ist, **dadurch gekennzeichnet, daß** das Zentrierglied (11) durch eine an der Grundbacke (8) befestigte Hohlwalze (12) gebildet ist.

2. Spannfutter nach Anspruch 1, **dadurch gekennzeichnet, daß** die Nuten (10) in der Grundbacke (8) und der Aufspannbacke (9) eine V-förmige Gestalt haben.

3. Spannfutter nach Anspruch 1 oder 2, **dadurch gekennzeichnet, daß** die Hohlwalze (12) durch einen den Durchgang (14) der Hohlwalze (12) durchgreifenden Anker an der Grundbacke (8) festgelegt ist.

4. Spannfutter nach Anspruch 3, **dadurch gekennzeichnet, daß** der Anker durch einen U-förmigen, mit einem Schenkel in der Nut (10) verankerten Bügel (13) gebildet ist.

5. Spannfutter nach einem der Ansprüche 1 bis 4, **dadurch gekennzeichnet, daß** in der Grundbacke (8) und der Aufspannbacke (9) zwei nicht parallel, insbesondere rechtwinklig zueinander verlaufende Nuten (10) ausgebildet sind, in denen mindestens drei Zentrierglieder (11) angeordnet sind.

## Claims

1. A chuck having at least two clamping jaws, comprising a gripping jaw (9) and a base jaw (8), in particular a base jaw (8) displaceable in radial guide receiving means (3) by a clamping bar (6) mounted axially displaceably in the chuck body (2), wherein provided on the base jaw (8) and the gripping jaw (9) are grooves (10) which come into congruent relationship with each other and in which a reversibly deformable centering member (11) is arranged, **characterised in that** the centering member (11) is formed by a hollow roller (12) fixed to the base jaw (8).

2. A chuck according to claim 1 **characterised in that** the grooves (10) in the base jaw (8) and the gripping jaw (9) are of a V-shaped configuration.

3. A chuck according to claim 1 or claim 2 **characterised in that** the hollow roller (12) is fixed to the base jaw (8) by an anchor extending through a passage (14) in the hollow roller (12).

4. A chuck according to claim 3 **characterised in that** the anchor is formed by a U-shaped loop (13) anchored with a limb in the groove (10).

5. A chuck according to one of claims 1 to 4 **characterised in that** provided in the base jaw (8) and the gripping jaw (9) are two grooves (10) which extend in non-parallel and in particular right-angled relationship with each other and in which at least three centering members (11) are arranged.

## Revendications

1. Mandrin de serrage avec au moins deux mors de serrage, composés d'une garniture de mors (9) et d'un corps de mors (8), plus particulièrement d'un corps de mors (8) pouvant être déplacé dans des logements de guidage (3) radiaux au moyen d'une tige de serrage (6) montée coulissante dans la direction axiale dans le corps de mandrin (2), des rainures (10) qui coïncident mutuellement étant aménagées dans le corps de mors (8) et dans la garniture de mors (9), rainures dans lesquelles est disposé un élément de centrage (11) déformable de manière réversible, **caractérisé par le fait que** l'élément de centrage (11) est formé d'un cylindre creux (12) fixé au corps de mors (8).

2. Mandrin de serrage selon la revendication 1, **caractérisé par le fait que** les rainures (10) dans le corps de mors (8) et dans la garniture (9) ont une forme de V.

3. Mandrin de serrage selon la revendication 1 ou 2, **caractérisé par le fait que** le cylindre creux (12) est fixé au corps de mors (8) par un moyen d'ancrage qui traverse le passage (14) dans le cylindre creux (12).

4. Mandrin de serrage selon la revendication 3, **caractérisé par le fait que** le moyen d'ancrage est formé par un étrier (13) qui est fixé par une jambe (13) dans la rainure (10).

5. Mandrin de serrage selon une des revendications 1 à 4, **caractérisé par le fait que** sont aménagées dans le corps de mors (8) et dans la garniture de mors (9) deux rainures (10) non parallèles entre elles dans lesquelles sont disposés au moins deux éléments de centrage (11).
